# EUROPÄISCHE PATENTSCHRIFT

(11) **EP 0 364 939 B1**
(45) Veröffentlichungstag und Bekanntmachung des Hinweises auf die Patenterteilung: **28.07.1993**
(21) Anmeldenummer: 89119221.3
(22) Anmeldetag: 17.10.1989
(51) Int. Cl.: C08F 283/00, C08F 8/28

(54) **Polyvinylacetalgruppen enthaltende Pfropfpolymerisate auf Polyurethanpfropfgrundlagen, Verfahren zu ihrer Herstellung und ihre Anwendung**
Graft polymers which contain polyvinyl acetal groups and which are based on grafted polyurethane, process for their production and their use
Polymères greffés contenant des groupes polyvinylacétales sur une base de greffage en polyuréthane, leur procédé de fabrication et leur application

(30) Priorität: 21.10.1988 DE 3835840
(43) Veröffentlichungstag der Anmeldung: 25.04.1990
(73) Patentinhaber: HOECHST AKTIENGESELLSCHAFT, 65926 Frankfurt am Main (DE)
(72) Erfinder: Kroggel, Matthias, Dr., D-6233 Kelkheim (Taunus) (DE); Rauterkus, Karl-Josef, Dr., D-6233 Kelkheim (Taunus) (DE); Hermann, Hans-Dieter, Dr., D-6232 Bad Soden am Taunus (DE)

(56) Entgegenhaltungen:
- EP-A- 0 286 019
- EP-A- 0 308 832
- US-A- 4 374 953

## Beschreibung

Die Erfindung betrifft Polyvinylacetalgruppen enthaltende Polymerisate, die acetalisierte Polyvinylalkoholgruppen auf Polyurethanpfropfgrundlagen enthalten, Verfahren zu ihrer Herstellung aus Pfropfpolymerisaten, die Vinylalkoholgruppen auf Polyurethanpfropfgrundlagen enthalten, durch Umsetzung mit Aldehyden sowie Verwendung der acetalisierten Polymerisate, z. B. in Folienform zur Herstellung von Verbundgläsern, als Bindemittel in Klebstoffen und Lacken, als Beschichtungsmittel sowie zur Herstellung von Formkörpern.

Polyvinylacetale, vorzugsweise Polyvinylbutyrale auf der Basis von üblichem Polyvinylalkohol (PVAL), werden bekanntlich u. a. zu Folien verarbeitet, die bei der Herstellung von Verbundgläsern Verwendung finden können.

Die thermoplastische Verarbeitung von Polyvinylacetalen, insbesondere von Polyvinylbutyralen auf der Basis von PVAL, gelingt aufgrund hoher Schmelzpunkte, geringer Fließfähigkeit und geringer thermischer Belastbarkeit von handelsüblichen Produkten bekanntlich nur nach Zumischung von wirksamen organischen Weichmachern. Als solche kommen z. B. Phthalsäureester von (C₆-C₁₀)-Alkoholen, Triethylenglykoldi(n-heptanoat), Tri-(2-ethylhexyl)phosphat, Trikresylphosphat oder Mischungen dieser Verbindungen in Frage.

Weichmacherhaltige Gemische bekannter Polyvinylacetale weisen jedoch bei verschiedenen Anwendungen erhebliche Nachteile auf. So sind z. B. viele Weichmacher nur begrenzt mischbar bzw. begrenzt verträglich mit Polyvinylbutyralen, so daß sich beim Einsatz von zu hohen Weichmacherkonzentrationen die Weichmacher aus dem Polymerisat abscheiden können. Auch bei verträglichen Mischungen kann der Weichmacher z. B. bei Kontakt mit Lösungsmitteln leicht extrahiert werden, was zu unerwünschten Eigenschaftsänderungen führen kann.

Der vorliegenden Erfindung lag somit die Aufgabe zugrunde, Polymerisate des Polyvinylacetaltyps verfügbar zu machen, die auch ohne die Mitverwendung von Weichmachern eingesetzt und insbesondere ohne Weichmacherzusatz thermoplastisch verformt werden können.

Die gestellte Aufgabe konnte nun überraschenderweise dadurch gelöst werden, daß man acetalisierte Polymerisate verwendet, die erhalten werden können, indem man Pfropfpolymerisate, die Polyvinylalkoholgruppen auf Polyurethanpfropfgrundlagen enthalten, acetalisiert.

Gegenstand der Erfindung sind daher Polyvinylacetalgruppen enthaltende Polymerisate, die dadurch gekennzeichnet sind, daß sie aus Pfropfpolymerisaten, die Polyvinylalkoholgruppen auf Polyurethanpfropfgrundlagen enthalten, durch Umsetzung mit Aldehyden erhalten wurden.

Die Acetalisierung der genannten Pfropfpolymerisate kann erfindungsgemäß nach bekannten Methoden erfolgen, vorzugsweise in Gegenwart von sauren Katalysatoren. In wäßrigen Medien werden z. B. als saure Katalysatoren vorzugsweise anorganische Säuren, wie z. B. Salzsäure, Schwefelsäure, Phosphorsäure, gegebenenfalls Salpetersäure, verwendet.

Als Aldehyde kommen prinzipiell alle bekannten und zu Acetalisierungsreaktionen befähigten Aldehyde, vorzugsweise die bei der Acetalisierung von PVAL als verwendbar bekannt gewordenen Aldehyde, in Frage. Bevorzugt kommen lineare und/oder cycloaliphatische und/oder aromatische Aldehyde zur Anwendung, insbesondere solche mit 1 bis 20 C-Atomen. Bevorzugt sind z. B. Benzaldehyd, Formaldehyd, Acetaldehyd, Propionaldehyd, Butyraldehyd, Isononanaldehyd sowie gegebenenfalls substituierte Varianten der genannten Aldehyde. Besonders bevorzugt sind (C₂-C₄)-Aldehyde, insbesondere Butyraldehyd. Eine weitere bevorzugte Variante ist die Verwendung von Hydroxyaldehyden. Die genannten Aldehyde können sowohl allein als auch als Mischungen aus verschiedenen Aldehyden eingesetzt werden.

Die erfindungsgemäß zur Acetalisierung verwendeten Pfropfpolymerisate, die Polyvinylalkoholgruppen auf Polyurethanpfropfgrundlagen enthalten, und ihre Herstellung sind u. a. Gegenstand der bereits eingereichten EP-OS 0 308 832 (Art. 54 (3) EPÜ), auf die hiermit Bezug genommen wird.

Die Acetalisierung von Pfropfpolymerisaten, die Polyvinylalkoholgruppen auf Polyurethanpfropfgrundlagen enthalten, sowie die Verwendung der dabei resultierenden und Polyvinylacetalgruppen enthaltenden Polymerisate waren bisher weder bekannt noch wurden sie vorgeschlagen.

Polyvinylacetalgruppen enthaltende Pfropfpolymerisate auf Polyalkylenoxidpfropfgrundlagen sind aus der DE-AS 1086435 bereits bekannt. Diese Produkte, insbesondere die Butyrale, sind jedoch nicht thermostabil. Sie sind außerdem wegen unzureichender Fließfähigkeit thermoplastisch schwer verarbeitbar, so daß ihre thermoplastische Verformung bzw. Verarbeitung und auch ihre Verwendung keinerlei Bedeutung gewinnen konnten.

Die erfindungsgemäß zur Acetalisierung verwendeten Pfropfpolymerisate enthalten Polyurethanpfropfgrundlagen, die mindestens 2 Urethangruppen im Molekül besitzen, wobei die Anzahl der Urethangruppen pro Pfropfgrundlagenmolekül nach oben keiner besonderen Begrenzung unterliegt und deutlich höhere Werte als 2 annehmen kann. Vorzugsweise liegen diese Werte im Bereich von 9 bis 101.

Die Polyurethanpfropfgrundlagen besitzen ferner vorzugsweise Molekulargewichte im Bereich von 200 bis 100000 g/mol, insbesondere 1300 bis 50000 g/mol. Grundsätzlich unterliegen die Molekulargewichte der Polyurethanpfropfgrundlagen jedoch keiner Beschränkung.

Die Polyurethanpfropfgrundlagen lassen sich nach üblichen Methoden der Polyurethansynthese herstellen und werden bevorzugt unter Verwendung von Katalysatoren, wie z. B. tertiären Aminen oder organischen Zinnverbindungen, bei Temperaturen zwischen 60 und 120°C, vorzugsweise zwischen 70 und 100°C, synthetisiert.
Sie sind aus Diol- und Diisocyanatkomponenten aufgebaut und enthalten gegebenenfalls geringe Mengen Einheiten aus monofunktionellen Isocyanaten sowie Einheiten aus halbveresterten oder halbverätherten Diolresten. Prinzipiell sind alle bei der Polyurethansynthese verwendbaren Diole einsetzbar. Bevorzugt sind cycloaliphatische Diole, wie z. B. Cyclohexandiole, sowie aliphatische Diole mit vorzugsweise 2 bis 20 C-Atomen. Bevorzugt sind ferner Polyalkylenglykole, wie z. B. Polypropylenoxide, Polybutylenoxide, Mischpolymere aus Ethylenoxid, Propylenoxid, Butylenoxid, vorzugsweise deren Blockcopolymere, besonders bevorzugt sind die sog. Polyethylenglykole bzw. Polyethylenoxide, d.s. insbesondere die α,ω-Dihydroxypolyethylenoxide.

Vorzugsweise werden Polyethylenglykole mit Molekulargewichten zwischen 200 und 10000 g/mol verwendet, wobei Polyethylenglykole mit Molekulargewichten zwischen 400 und 1500 g/mol besonders bevorzugt sind. Die Polyethylenglykole werden gegebenenfalls in Kombination mit niedermolekularen aliphatischen Diolen, wie z. B. 1,4-Butandiol, 1,3-Propandiol, 1,6-Hexandiol, Hexylenglykol, Ethylenglykol, Diethylenglykol, Triethylenglykol, eingesetzt. Bevorzugt liegt ein molares Verhältnis von Polyethylenglykol zu niedermolekularem aliphatischem Diol von 1 : 0,1 bis 1 : 0,7 vor.

Als Diisocyanatkomponenten werden aromatische Diisocyanate, vorzugsweise mit bis zu 25 C-Atomen, wie z. B. m- und p-Diisocyanatoxylol, 2,4-Diisocyanatotoluol, 2,6-Diisocyanatotoluol oder Gemische der beiden letzteren Isomeren, 1,5-Diisocyanatonaphthalin, 4,4′-Diisocyanatodiphenylmethan, 4,4′-Diisocyanatophenylbenzylether verwendet.

Bevorzugt werden aliphatische und/oder cycloaliphatische Diisocyanate, vorzugsweise mit bis zu 25 C-Atomen, eingesetzt. Bevorzugte aliphatische Diisocyanate sind z. B. solche mit 2 bis 12 C-Atomen im aliphatischen Rest, wie z. B. Ethylendiisocyanat, Propylendiisocyanat, Tetramethylendiisocyanat, 2,2,4-Trimethylhexamethylendiisocyanat. Bevorzugte cycloaliphatische Diisocyanate sind z. B. 1,4-Diisocyanatocyclohexan, 4,4'-Methylen-bis(cyclohexyldiisocyanat), 1-Methyl-2,4-cyclohexyldiisocyanat, 1-Methyl-2,6-cyclohexyldiisocyanat, 1,3-Bis(isocyanatomethyl)-cyclohexan.

Besonders bevorzugt ist die Verwendung von 1,6-Hexamethylendiisocyanat und/oder insbesondere Isophorondiisocyanat.

Die Molverhältnisse von Diol- zu Diisocyanatkomponenten liegen vorzugsweise zwischen 1 : 0,99 und 1 : 0,5, insbesondere zwischen 1 : 0,98 und 1 : 0,7. Die mittleren Molekulargewichte der Polyurethane liegen vorzugsweise zwischen 200 und 100000 g/mol, insbesondere zwischen 1300 und 50000 g/mol, besonders bevorzugt zwischen 3000 und 25000 g/mol. Die Ermittlung der mittleren Molekulargewichte (Gewichtsmittel) kann nach üblichen experimentellen und/oder rechnerischen Methoden erfolgen. Zur Regelung des Molekulargewichtes bei der Herstellung der Polyurethanpfropfgrundlagen können Monoisocyanate verwendet werden.

Es ist darauf hinzuweisen, daß z. B. bei vorgegebenem Molekulargewicht für die Pfropfgrundlage die Anzahl ihrer Urethangruppen direkt von den Molekulargewichten der verwendeten Diol- bzw. Diisocyanat-Komponenten abhängt.

Die Moleküle der Polyurethanpfropfgrundlagen können als Endgruppen u. a. freie OH-Gruppen oder veresterte oder verätherte OH-Gruppen enthalten und/oder ihre OH-Gruppen können mit Isocyanatresten zu Urethangruppen umgesetzt worden sein.

Zur Pfropfung auf die Polyurethanpfropfgrundlagen werden bevorzugt Vinylcarbonsäureester mit 3 bis 20 C-Atomen eingesetzt. Besonders bevorzugt sind Vinylacetat und/oder Vinylpropionat, insbesondere Vinylacetat. Bevorzugt sind ferner Gemische aus Vinylacetat und/oder Vinylpropionat und Versaticsäurevinylester.

Bevorzugt wird Vinylacetat aufgepfropft. Insbesondere im Hinblick auf die erfindungsgemäß erforderliche Teil- oder Vollverseifung der Pfropfpolymerisate im Anschluß an die Pfropfpolymerisation ist bei der Pfropfung neben Vinylacetat die Mitverwendung von Vinylpropionat vorteilhaft. Außerdem lassen sich copolymerisierbare Gemische aus Vinylcarbonsäureestern pfropfen, vorzugsweise Gemische aus Vinylacetat und Versaticsäurevinylester, wobei der Versaticsäurevinylesteranteil 0,2 bis 10 Gew.-%, vorzugsweise 0,5 bis 5 Gew.-%, bezogen auf den Vinylacetatanteil, betragen kann. Auch die Pfropfung mit verschiedenen Vinylcarbonsäureestern in Form von Blockcopolymeren, gegebenenfalls in Kombination mit weiteren ethylenisch ungesättigten und copolymerisationsfähigen Monomeren, kann vorteilhaft sein.

So können die Vinylcarbonsäureester auch zusammen mit anderen ethylenisch ungesättigten und copolymerisierbaren Monomeren, vorzugsweise mit ungesättigten Carbonsäuren und/oder den Estern von ungesättigten Carbonsäuren, wie z. B. Maleinsäure, Itaconsäure, Mesaconsäure, Crotonsäure, Acrylsäure bzw. deren Estern, sowie auch mit Ethylen in gewissen Mengenverhältnissen aufgepfropft werden. Die hierbei erhältlichen Pfropfpolymerisate können anschließend teilweise oder vollständig hydrolysiert werden.

Die Pfropfung wird unter Verwendung von Radikalketten startenden Pfropfkatalysatoren durchgeführt, wobei hierfür vorzugsweise alle in den Monomeren, der Monomerenmischung bzw. der Monomerenlösung löslichen Radikalbildner in Betracht kommen können. Insbesondere organische Per-Verbindungen, wie Peroxide und Percarbonate, sowie organische Azo-Verbindungen haben sich für die Pfropfung bewährt, bevorzugt wird Azo-bis-isobutyronitril, tert.-Butylperoxy-2-ethylhexanoat und besonders bevorzugt Dibenzoylperoxid verwendet. Die Pfropfreaktion wird in Gegenwart von vorzugsweise 0,013 bis 1,3 Mol-%, insbesondere 0,026 bis 0,27 Mol-%, Radikale bildendem Katalysator, bezogen auf die Monomerenmenge, durchgeführt.

Die erhaltenen Pfropfpolymerisate lassen sich durch Hydrolyse, Alkoholyse oder Umesterung in teil- oder vollverseifte Produkte überführen, wobei der Hydrolysegrad erfindungsgemäß vorzugsweise mindestens 10 Mol-%, insbesondere mehr als 70 Mol-%, besonders bevorzugt 85 bis 99 Mol-%, bezogen auf die Molzahl der aufgepfropften verseifbaren Vinylestermonomereinheiten im Pfropfpolymerisat, beträgt.

Der Vinylestergehalt der verseiften bzw. teilverseiften Pfropfpolymerisate beträgt erfindungsgemäß vorzugsweise 0,1 bis 85 Gew.-%, bezogen auf das verseifte bzw. teilverseifte Pfropfpolymerisat, besonders bevorzugt 0,5 bis 80 Gew.-%, insbesondere 1 bis 30 Gew.-%.

Der Gehalt an Vinylalkoholeinheiten in den verseiften bzw. teilverseiften und nicht acetalisierten Pfropfpolymerisaten beträgt erfindungsgemäß vorzugsweise > 10 Gew.-%, insbesondere 15 bis 85 Gew.-%, besonders bevorzugt 30 bis 80 Gew.-%, bezogen auf das verseifte bzw. teilverseifte, nicht acetalisierte Pfropfpolymerisat.

Die Pfropfreaktion kann z. B. in Emulsion oder in Suspension erfolgen, bevorzugt wird sie aber in Lösung oder in Substanz durchgeführt.

Die aufzupfropfenden Monomeren werden vorzugsweise der im Reaktionsgefäß vorgelegten Polyurethanpfropfgrundlage kontinuierlich oder diskontinuierlich zudosiert, wobei es vorteilhaft ist, die Dosiergeschwindigkeit und die Verfahrensparameter so zu wählen, daß die Bildung von nicht aufgepfropften Homopolymerisaten weitestgehend ausgeschlossen ist. Die Monomeren können, soweit sie in flüssiger Form vorliegen, in Substanz oder auch als Lösung zugesetzt werden. Der Katalysator wird bevorzugt in der Monomerenflüssigkeit bzw. der Monomerenlösung gelöst und zusammen mit dieser zudosiert. Er kann aber auch im Reaktionsgefäß zusammen mit der Polyurethanpfropfgrundlage, zumindest teilweise, vorgelegt werden. Die Pfropfreaktion wird in Abhängigkeit vom eingesetzten Katalysator und, speziell bei der Substanzpolymerisation, in Abhängigkeit von der eingesetzten Polyurethanpfropfgrundlage, vorzugsweise bei Temperaturen zwischen 40 und 120°C, insbesondere zwischen 65 und 100°C, durchgeführt.
Alternativ ist auch Batch-Pfropfpolymerisation möglich, wobei jedoch dieses Verfahren häufig zu Gemischen aus Pfropfpolymerisaten und Homopolymerisaten aus den aufzupfropfenden Monomeren führen kann.

Die bei der Pfropfpolymerisation auftretende Viskositätserhöhung des Reaktionsgemisches, insbesondere bei der Substanzpolymerisation, kann häufig zu Verarbeitungsproblemen führen, die z. B. durch kontinuierlichen oder diskontinuierlichen Zusatz von Lösungsmitteln umgangen werden können. Als Lösungsmittel eignen sich vorzugsweise monofunktionelle Alkohole, insbesondere Methanol und Ethanol, die gegebenenfalls auch bereits für das Lösen der zu pfropfenden Monomeren eingesetzt werden können.

Bei der Lösungspolymerisation sollte der Lösungsmittelanteil in dem Reaktionsgemisch vorzugsweise unter 20 Gew.-%, insbesondere unter 10 Gew.-%, bezogen auf das Reaktionsgemisch, liegen.

Die erhaltenen Pfropfpolymerisate lassen sich nach Entfernen der Restmonomeren (meist durch azeotrope Destillation mit Methanol) durch Eintragen der Mischung in Wasser in ihrer unverseiften Form ausfällen. Sie können aber auch nach Verdünnung mit einem Lösungsmittel, vorzugsweise mit Methanol, mittels saurer Katalysatoren (z.B. Salzsäure, Phosphorsäure, p-Toluolsulfonsäure) oder aber vorzugsweise unter Verwendung alkalischer Katalysatoren (z. B. NaOH, KOH, NaOCH₃, KOCH₃), gegebenenfalls unter Mitverwendung von Wasser, nach üblichen literaturbekannten Methoden unmittelbar in die gewünschten teil- bzw. vollverseiften Produkte übergeführt werden.

Bevorzugt beträgt der Alkalihydroxid-Zusatz 0,1 bis 20 Mol-%, insbesondere 0,5 bis 10 Mol-%, bezogen auf die aufgepfropfte und verseifbare Monomereinheitenmenge. Die Verseifung wird vorzugsweise zwischen 20 und 60°C durchgeführt und zwar insbesondere durch alkalische Alkoholyse in niederem Alkanol, vorzugsweise in Methanol.

Enthalten die Pfropfpolymerisate neben den aufgepfropften Vinylestereinheiten noch weitere aufgepfropfte Comonomereinheiten aus ethylenisch ungesättigten Monomeren, die verseifbar sind, so können auch diese bei der Verseifungsreaktion bzw. Alkoholyse hydrolysiert werden.

Es hat sich ferner gezeigt, daß in den Pfropfpolymerisaten die Vinylestereinheiten mit vorzugsweise 1 bis 4 C-Atomen im Carbonsäurerest sich besonders gut alkalisch verseifen bzw. alkoholytisch spalten lassen, während Vinylestereinheiten mit längerkettigen Carbonsäureresten, vorzugsweise mit längerkettigen verzweigten Carbonsäureresten, gegen alkalische Verseifung bzw. alkalische Alkoholyse beständiger sind, was für die Herstellung einer Reihe von teilverseiften Pfropfpolymerisaten von Bedeutung sein kann.

Die relevanten Syntheseparameter bzw. Synthesevarianten und Verseifungsgrade können jeweils so gewählt und aufeinander abgestimmt werden, daß wasserlösliche oder wasserunlösliche verseifte bzw. teilverseifte Pfropfpolymerisate mit den gewünschten aufgepfropften und acetalisierungsfähigen Polyvinylalkoholgruppen erhalten werden.

Das Eigenschaftsbild der erfindungsgemäß für die Acetalisierung verwendeten wasserlöslichen oder wasserunlöslichen und Polyvinylalkoholgruppen enthaltenden Pfropfpolymerisate wird u. a. beeinflußt durch das Molekulargewicht und den Aufbau der Polyurethanpfropfgrundlagen, die Art, Zusammensetzung und Menge an aufgepfropften Monomereinheiten sowie das Molekulargewicht und den Hydrolysegrad des Pfropfpolymerisats.

Grundsätzlich sind alle vorstehend genannten bzw. angesprochenen und Polyvinylalkoholgruppen auf Polyurethanpfropfgrundlagen enthaltenden Pfropfpolymerisate durch polymeranaloge Umsetzungen mit Aldehyden in entsprechende Polyvinylacetalgruppen enthaltende Pfropfpolymerisate überführbar. Die Acetalisierungsreaktionen können z. B. in wäßrigen Medien oder in organischen Lösungsmitteln, die auch Wasser enthalten können, durchgeführt werden.

Gegenstand der Erfindung sind daher auch Verfahren zur Herstellung der erfindungsgemäßen, Polyvinylacetalgruppen enthaltenden Pfropfpolymerisate auf Polyurethanpfropfgrundlagen.

Der besseren Übersichtlichkeit wegen werden nachstehend die erfindungsgemäß zu acetalisierenden und Polyvinylalkoholgruppen auf Polyurethanpfropfgrundlagen enthaltenden Pfropfpolymerisate gegebenenfalls kurz "Pfropfpolyvinylalkohol" bzw. "Pfropf- PVAL" und deren Acetalisierungsprodukte "Pfropfpolyvinylacetal" bzw. "Pfropf-PV-Acetal" genannt.

Die wasserlöslichen Pfropfpolyvinylalkohole werden vorzugsweise in wäßrigen Lösungen unter Zusatz von sauren Katalysatoren mit Aldehyden zu Acetalen umgesetzt. Hierbei ist es z. B. möglich, entweder einen der beispielsweise bereits oben genannten Säurekatalysatoren einem Gemisch aus wäßriger Pfropf-PVAL-Lösung und Aldehyd, oder den Aldehyd einem Gemisch aus wäßriger Pfropf-PVAL-Lösung und Säurekatalysator zuzudosieren. Eintopfreaktionen sind ebenfalls durchführbar, können jedoch häufig ein Verklumpen des gebildeten Umsetzungsprodukts zur Folge haben. Grundsätzlich sind für die Acetalisierung der erfindungsgemäßen Pfropfpolyvinylalkohole in wäßrigem Medium alle Säurekatalysatoren und alle Aldehyde verwendbar, die bei der entsprechenden Acetalisierung von üblichem Polyvinylalkohol als verwendbar bekannt geworden sind und wie sie außerdem vorstehend bereits ausführlich beschrieben wurden.

Vorteilhaft kann sich bei der Acetalisierung in wäßrigen Medien die Mitverwendung von Emulgatoren auf den Acetalisierungsverlauf auswirken. Als besonders geeignete Emulgatoren kommen vorzugsweise anionische Emulgatoren aus der Gruppe (C₈-C₂₀)-Alkansulfonsäuren, fluorierte Fettsäuren bzw. fluorierte langkettige Sulfonsäuren, langkettige Alkylsulfosuccinatester, sowie Gemische aus diesen Emulgatoren, in Frage.

Zur Herstellung der erfindungsgemäßen Pfropfpolyvinylacetale in wäßrigem Medium werden nach bekannten Methoden vorzugsweise 1 bis 50 gew.-%ige, insbesondere 5 bis 20 gew.-%ige, wäßrige Lösungen erfindungsgemäßer Pfropfpolyvinylalkohole vorzugsweise in der Wärme hergestellt, der Säurekatalysator zugesetzt, die Lösungen anschließend auf Temperaturen von < 15°C abgekühlt und die Acetalisierungsreaktion durch Zudosieren des Aldehyds, vorzugsweise innerhalb von 5 bis 300 Minuten, unter starkem Rühren durchgeführt. Die Acetalisierungsreaktion ist gegebenenfalls auch als Batch-Reaktion durchführbar. Die Menge des zuzusetzenden Aldehyds richtet sich nach dem angestrebten Acetalisierungsgrad und dem daraus errechenbaren stöchiometrischen Bedarf. Aufgrund des bekanntermaßen meist nicht vollständigen Aldehydumsatzes wird bevorzugt mit Aldehydüberschuß gearbeitet. Besonders bevorzugt wird der Aldehyd in bis zu 30 mol-%igem, insbesondere 10 bis 20 mol-%igem, Überschuß verwendet.

In einer besonders bevorzugten Verfahrensvarianten wird die Acetalisierung in der wäßrigen Ausgangs-Pfropfpolyvinylalkohol-Säurekatalysator-Lösung bei Temperaturen von 0 bis 5°C, wobei die wäßrige Lösung vor dem Reaktionsbeginn vorzugsweise mindestens 30 Minuten bei der tiefen Reaktionstemperatur ruhig stehengelassen wird, in Gang gesetzt, wonach sich das gebildete Pfropfpolyvinylacetal alsbald meist pulverförmig abscheidet. Zur Vervollständigung der Reaktion wird das Reaktionsgemisch langsam auf Raumtemperatur erwärmt, und es wird gegebenenfalls eine ca. 1 bis 3 Stunden dauernde Nachreaktion bei höheren Temperaturen, z. B. bei 25 bis 70°C, angeschlossen. Gegebenenfalls wird die Umsetzung unter Emulgatorzusatz durchgeführt, wobei der Emulgator entweder der Ausgangslösung, oder während des Reaktionsverlaufs und/oder bei der Nachreaktion zugesetzt werden kann. Die zu verwendende Menge Säurekatalysator richtet sich u. a. nach dem angestrebten Acetalisierungsgrad und kann vorzugsweise bis zu 1,1 mol-Äquivalent, bezogen auf den molaren Vinylalkoholeinheitengehalt, betragen.

Das gebildete Pfropfpolyvinylacetal, das sich vorzugsweise in Pulverform aus der wäßrigen Reaktionslösung abscheidet, wird von der flüssigen Phase abgesaugt, mit schwach alkalisch eingestelltem Wasser (pH 9 bis 12) gewaschen und getrocknet. Acetalisierungsprodukte, die sich aus der wäßrigen Reaktionslösung nicht abscheiden, können nach Zusatz von Fällungsmitteln isoliert, gereinigt und getrocknet werden.

Grundsätzlich ist die Acetalisierung aller erfindungsgemäßen Pfropfpolyvinylalkohole auch in organischen Lösungsmitteln durchführbar. Mit den in organischen Lösungsmitteln nicht löslichen Pfropf-PVAL-en kann sie als Zwei- bzw. Mehrphasenreaktion (Heterogenreaktion), mit den in organischen Lösungsmitteln löslichen Pfropf-PVAL-en als Einphasenreaktion durchgeführt werden. Für die Acetalisierung der erfindungsgemäßen Pfropf-PVAL-e in organischen Lösungsmitteln sind grundsätzlich alle Lösungsmittel, Säurekatalysatoren und Aldehyde verwendbar, die bei der entsprechenden Acetalisierung von üblichem Polyvinylalkohol als verwendbar bekannt geworden sind und wie sie außerdem auch vorstehend bereits ausführlich beschrieben wurden.

Als Lösungsmittel eignen sich vorzugsweise z. B. Xylole, Toluol, Chloroform, Methylenchlorid, besonders bevorzugt werden jedoch mit Wasser mischbare Lösungsmittel verwendet, insbesondere wasserlösliche Alkohole, vorzugsweise Ethanol und/oder Methanol. Auch wäßrige Verdünnungen von wasserlöslichen bzw. wasserverdünnbaren Lösungsmitteln können verwendet werden.

Als Säurekatalysatoren werden vorzugsweise organische Sulfonsäuren, wie z. B. Toluolsulfonsäuren, ferner Mineralsäuren, wie z. B. Schwefelsäure, Salzsäure, gegebenenfalls Salpetersäure, sowie eine Reihe weiterer starker organischer und/oder anorganischer Säuren verwendet.

Zur Herstellung der erfindungsgemäßen Pfropfpolyvinylacetale in organischen Lösungsmitteln werden der Säurekatalysator, der Aldehyd und der Pfropf- PVAL in dem organischen Lösungsmittel aufgeschlämmt bzw. suspendiert bzw. dispergiert oder gelöst und das Gemisch unter Rückfluß erhitzt. Gegebenenfalls kann der Aldehyd auch während des Reaktionsverlaufs zudosiert werden. Die in dem organischen Lösungsmittel unlöslichen Pfropf-PVAL-e gehen dabei mit fortschreitender Acetalisierung in Lösung.

Nach Beendigung der Acetalisierungsreaktion wird das Reaktionsprodukt durch Zusatz von unpolaren Lösungsmitteln, wie z. B. Pentan, Hexan, Heptan u. a. zu der Reaktionslösung, oder durch Eingießen der Reaktionslösung in eiskaltes Wasser bzw. eiskaltes Wasser-Alkohol-Gemisch, vorzugsweise in feinteiliger Pulverform ausgefällt, von der flüssigen Phase abgesaugt, mit schwach alkalisch eingestelltem Wasser (pH 9 bis 12) gewaschen und getrocknet.

Der Acetalisierungsgrad der erfindungsgemäß erhaltenen Pfropfpolyvinylacetale liegt vorzugsweise in einem solchen Bereich, daß der Gehalt an nicht acetalisierten Vinylalkoholeinheiten in dem Pfropfpolyvinylacetal bevorzugt > 7,5 Mol-%, insbesondere 10 bis 60 Mol-%, besonders bevorzugt 20 bis 45 Mol-%, jeweils bezogen auf den molaren Gehalt (= 100 Mol-%) an Vinylalkoholeinheiten in dem Ausgangs-Pfropfpolyvinylalkohol vor der Acetalisierung, beträgt.

Die erfindungsgemäßen Pfropfpolyvinylacetale eignen sich sowohl in Reinform als auch in Abmischung mit geeigneten organischen Weichmachern zur Herstellung von Folien durch thermoplastische Verformung. Als Weichmacher geeignet sind grundsätzlich alle für die handelsüblichen Polyvinylacetale verwendbaren Weichmacher, vorzugsweise z. B. Triethylenglykoldi(n-heptanoat), ferner Adipinsäureester, Phthalsäureester, Phosphorsäureester u. a.

Die erfindungsgemäßen Propfpolyvinylacetale können darüber hinaus auch mit handelsüblichen Polyvinylacetalen abgemischt werden, vorzugsweise im Gewichtsverhältnis von 99 : 1 bis 1 : 99, insbesondere 95 : 5 bis 5 : 95, besonders bevorzugt 80 : 20 bis 20 : 80. Gemische dieser Art können auch erhalten werden, wenn man Gemische aus Pfropf-PVAL und handelsüblichem PVAL, vorzugsweise im Gewichtsverhältnis von 99 : 1 bis 1 : 99, insbesondere 95 : 5 bis 5 : 95, besonders bevorzugt 80 : 20 bis 20 : 80, erfindungsgemäß acetalisiert.

Sowohl durch Abmischung mit handelsüblichen Polyvinylacetalen hergestellte als auch durch Acetalisierung von Gemischen aus Pfropf-PVAL und handelsüblichem PVAL erhaltene Pfropfpolyvinylacetale können gleichfalls, gegebenenfalls unter Mitverwendung von Weichmachern, thermoplastisch zu Folien verarbeitet werden.

Bevorzugt sind erfindungsgemäße Pfropfpolyvinylbutyralfolien und deren Verwendung zur Herstellung von Verbundgläsern. Bei der Verarbeitung von Pfropfpolyvinylbutyralen bzw. ihren Abmischungen mit handelsüblichen Polyvinylbutyralen zu Folien lassen sich die Folieneigenschaften, wie z. B. die Folienreißfestigkeit, die Foliendehnbarkeit und das Blockungsverhalten in einem breiten Rahmen beeinflussen.

Erfindungsgemäße Pfropfpolyvinylacetale lassen sich aufgrund ihrer guten Haftungseigenschaften gegenüber diversen Materialien, vorzugsweise gegenüber Metallen, vorteilhaft als Beschichtungsmassen verwenden, wobei solche Beschichtungen sowohl aus Polymerisatlösungen als auch aus der Polymerisatschmelze aufgebracht werden können. Demgegenüber lassen sich handelsübliche Polyvinylbutyrale im allgemeinen nicht ohne den Zusatz von organischen Weichmachern aus der Schmelze anwenden.

Erfindungsgemäße Pfropfpolyvinylacetale lassen sich ferner nach unterschiedlichen Methoden vernetzen. So können Vernetzungen z. B. durch Anwendung von reaktiven mehrfunktionellen Verbindungen, wie z. B. Isocyanaten, Säurechloriden etc., erzielt werden, oder auch durch radikalisch initiierte Vernetzungen, wie z. B. durch photochemische oder thermische Initiierung in Gegenwart von Radikalbildnern und radikalisch polymerisierbaren Monomeren. Aufgrund dieser zu Vernetzungen führenden Eigenschaften eignen sich die erfindungsgemäßen Pfropfpolyvinylacetale auch als Bindemittel, z. B. in Lackzubereitungen auf Lösungsmittelbasis.

Wegen ihrer überraschenden korrosionsneutralen Eigenschaften stellen die erfindungsgemäßen Pfropfpolyvinylacetale insbesondere auch interessante Beschichtungsmassen für Metalle, vorzugsweise für Eisen und Stahl, dar.

Gegenstand der Erfindung ist daher ferner die Verwendung der erfindungsgemäßen Pfropfpolyvinylacetale, u. a. auf allen in der vorliegenden Beschreibung genannten Anwendungsgebieten.

So können die erfindungsgemäßen Pfropfpolyvinylacetale vorteilhaft auch auf zahlreichen Anwendungsgebieten eingesetzt werden, auf denen üblicherweise bekannte Polyvinylacetale Verwendung finden, vorzugsweise z. B. als Bindemittel für Pigmente, zur Herstellung von Druckfarben, von Schmelzklebern, von lösungsmittelhaltigen Klebstoffen sowie als Bindemittel für Keramikpulver, vorzugsweise zur Herstellung von hochwertigen keramischen Elektronikbauteilen. Sie eignen sich auch als Bindemittel und/oder Beschichtungsmittelbestandteil für anorganische und/oder organische Fasern, Fäden, Faservliese, textile Gebilde, Zellulosematerialien und Papier, sowie als Werkstoff für thermoplastisch verarbeitbare Formkörper und Beschichtungsmassen gegebenenfalls in Kombination mit üblichen Zusatzstoffen und/oder Modifizierungskomponenten bzw. Vernetzungsmitteln.

Je nach Anwendung können die erfindungsgemäßen Pfropfpolyvinylacetale mit üblichen Zusatzstoffen vermischt werden, wie z. B. Pigmenten, Farbstoffen, Weichmachern, Lösungsmitteln, Haftungsregulatoren und Stabilisatoren.

Wie bereits oben erwähnt, ist eine Mitverwendung von Weichmachern bei der thermoplastischen Verformung erfindungsgemäßer Pfropfpolyvinylacetale prinzipiell nicht erforderlich, obgleich sie in manchen Fällen vorteilhaft sein kann. Im letzteren Fall liegen z. B. bei erfindungsgemäßen Pfropfpolyvinylbutyralen die Aufwandmengen an Weichmacher jedoch deutlich niedriger als bei vergleichbaren bekannten Polyvinylbutyralen.

Als Stabilisatoren können die bei den bekannten Polyvinylbutyralen verwendeten phenolischen Verbindungen Verwendung finden, wie z. B. 2,4-Di-tert.-butyl-p-kresol, Phosphite wie Tris-nonyl-phenylphosphit, u. a.

Die Zugabe der genannten Zusatzstoffe kann in vielen Fällen sowohl vor als auch während oder nach der Herstellung der erfindungsgemäßen Pfropfpolyvinylacetale erfolgen.

Die Erfindung wird durch die nachfolgenden Beispiele näher erläutert.

### Beispiele 1 - 4

### Herstellung von Polyurethanpfropfgrundlagen (PU)

### Beispiel 1

In einem Reaktionsgefäß mit Rührwerk werden unter Stickstoffatmosphäre die Diolkomponente, bestehend aus einer Mischung von Polyethylenglykol vom Molekulargewicht 1500 (= PEG 1500) und 1,4-Butandiol (= 1,4-Bu) im Molverhältnis PEG 1500 : 1,4-Bu = 1 : 0,43, und der Katalysator, bestehend aus 1,4-Dimethylpiperazin in einer Menge von 0,48 Mol-%, bezogen auf die Molmenge des eingesetzten Diisocyanats, vorgelegt und das Gemisch auf eine Reaktionstemperatur von 72°C erwärmt. Die Diisocyanatkomponente, bestehend aus 0,9 mol Isophorondiisocyanat pro mol Diolkomponentengemisch, wird anschließend so zudosiert, daß die Temperatur des Reaktionsgemisches 100°C nicht überschreitet. Nach vollständiger Zudosierung der Diisocyanatkomponente wird zur Vervollständigung der Reaktion eine Nachreaktionszeit von ca. 2 Stunden bei ca. 80 bis 100°C unter Rühren und Stickstoffatmosphäre angeschlossen.

Die Vollständigkeit des Umsatzes und damit das Ende der Reaktion kann durch Analyse der Diisocyanatkonzentration nach üblichen literaturbekannten Methoden (z. B. IR-Spektroskopie, Titration) ermittelt werden.

Das Molverhältnis von Diolkomponente zu Diisocyanatkomponente beträgt 1 : 0,9 und das daraus berechnete Molekulargewicht des resultierenden Polyurethans (PU), (= Polyurethanpfropfgrundlage), beträgt 12770 g/mol.

### Beispiel 2

Es wird wie in Beispiel 1, jedoch mit folgenden Abänderungen verfahren:
PEG 1500 wird weggelassen und es wird als Diolkomponente eine Mischung aus Polyethylenglykol vom Molekulargewicht 600 (= PEG 600) und 1,4-Butandiol (= 1,4-Bu) im Molverhältnis PEG 600 : 1,4-Bu = 1 : 0,43 verwendet, und das Reaktionsgemisch wird auf eine Reaktionstemperatur von 80°C, anstatt auf 72°C, erwärmt.

Das Molverhältnis von Diolkomponente zu Diisocyanatkomponente beträgt 1 : 0,9 und das daraus berechnete Molekulargewicht des resultierenden Polyurethans (PU), (=Polyurethanpfropfgrundlage), beträgt 6470 g/mol.

### Beispiel 3

Es wird wie in Beispiel 1, jedoch mit folgenden Abänderungen verfahren:
PEG 1500 wird weggelassen und es wird als Diolkomponente eine Mischung aus Polyethylenglykol vom Molekulargewicht 600 (= PEG 600) und 1,4-Butandiol (= 1,4-Bu) im Molverhältnis PEG 600 : 1,4-Bu = 1 : 0,43 verwendet, und das Reaktionsgemisch wird auf eine Reaktionstemperatur von 78°C, anstatt auf 72°C, erwärmt.

Das Molverhältnis von Diolkomponente zu Diisocyanatkomponente beträgt 1 : 0,96 und das daraus berechnete Molekulargewicht des resultierenden Polyurethans (PU), (= Polyurethanpfropfgrundlage), beträgt 16510 g/mol.

### Beispiel 4

Es wird wie in Beispiel 1, jedoch mit folgenden Abänderungen verfahren:
PEG 1500 wird weggelassen und es wird als Diolkomponente eine Mischung aus Polyethylenglykol vom Molekulargewicht 600 (= PEG 600) und 1,4-Butandiol (= 1,4-Bu) im Molverhältnis PEG 600 : 1,4-Bu = 1 : 0,67 verwendet, und das Reaktionsgemisch wird auf eine Reaktionstemperatur von 78°C, anstatt auf 72°C, erwärmt.

Das Molverhältnis von Diolkomponente zu Diisocyanatkomponente beträgt 1 : 0,97 und das daraus berechnete Molekulargewicht des resultierenden Polyurethans (PU), (= Polyurethanpfropfgrundlage), beträgt 18328 g/mol.

### Beispiele 5 bis 8

### Herstellung von Polyvinylacetatpfropfpolymerisaten auf Polyurethanpfropfgrundlagen

### Beispiel 5

Von der in Beispiel 1 erhaltenen Polyurethanpfropfgrundlage (PU) werden 1428 g in einem Reaktionsgefäß unter Stickstoffatmosphäre auf eine Temperatur von 73°C erwärmt. Das aufzupfropfende monomere Vinylacetat wird, zusammen mit dem radikalischen Initiator, im vorliegenden Fall 0,2 Mol-% Dibenzoylperoxid, bezogen auf die Molmenge des eingesetzten monomeren Vinylacetats, in Methanol gelöst und das Gemisch so langsam zu der Polyurethanpfropfgrundlage (PU) dosiert, daß eine Bildung von nicht aufgepfropftem Vinylacetat-Homopolymerisat weitestgehend unterbleibt. Die Temperatur der reaktiven Polymerisationsmasse sollte 120°C, vorzugsweise 100°C, nicht überschreiten. Die Zudosierzeit beträgt 420 Minuten und die Nachreaktionszeit beträgt 45 Minuten. Es werden pro g Polyurethanpfropfgrundlage (PU) 3,5 g monomeres Vinylacetat verwendet.

Nach Beendigung der Nachreaktion wird gegebenenfalls überschüssiges Restmonomeres durch azeotrope Destillation mit Methanol entfernt.

Das resultierende Polyvinylacetatpfropfpolymerisat enthält 77,1 Gew.-% aufgepfropftes Polyvinylacetat und zeigt eine Grenzviskositätszahl [η] von 18,8 , gemessen in Tetrahydrofuranlösung bei 25°C im Ostwaldviskosimeter. Das aus dem Umsatz rechnerisch ermittelte Molekulargewicht des Pfropfpolymerisats beträgt 55860 g/mol.

### Beispiel 6

Es wird wie in Beispiel 5, jedoch mit folgenden Abänderungen verfahren:
Anstelle der Polyurethanpfropfgrundlage (PU) des Beispiels 1 werden 1428 g Polyurethanpfropfgrundlage (PU) des Beispiels 2 verwendet und auf 75°C, anstatt auf 73°C, erwärmt.

Es werden pro g PU 4 g monomeres Vinylacetat verwendet.

Das resultierende Polyvinylacetatpfropfpolymerisat enthält 75 Gew.-% aufgepfropftes Polyvinylacetat, [η] beträgt 19,2 und das Molekulargewicht beträgt 25928 g/mol.

### Beispiel 7

Es wird wie in Beispiel 5, jedoch mit folgenden Abänderungen verfahren:
Anstelle der Polyurethanpfropfgrundlage (PU) des Beispiels 1 werden 1428 g Polyurethanpfropfgrundlage (PU) des Beispiels 3 verwendet und auf 75°C, anstatt auf 73°C, erwärmt.

Es werden pro g PU 2,32 g monomeres Vinylacetat verwendet und die Zudosierzeit beträgt 390 Minuten, anstatt 420 Minuten.

Das resultierende Polyvinylacetatpfropfpolymerisat enthält 68,2 Gew.-% aufgepfropftes Polyvinylacetat, [η] beträgt 20,9 und das Molekulargewicht beträgt 51946 g/mol.

### Beispiel 8

Es wird wie in Beispiel 5, jedoch mit folgenden Abänderungen verfahren:
Anstelle der Polyurethanpfropfgrundlage (PU) des Beispiels 1 werden 1428 g Polyurethanpfropfgrundlage (PU) des Beispiels 4 verwendet und auf 75°C, anstatt auf 73°C, erwärmt.

Es werden pro g PU 3,16 g monomeres Vinylacetat verwendet und die Zudosierzeit beträgt 300 Minuten, anstatt 420 Minuten.

Das resultierende Polyvinylacetatpfropfpolymerisat enthält 75,2 Gew.-% aufgepfropftes Polyvinylacetat, [η] beträgt 27,8 und das Molekulargewicht beträgt 73973 g/mol.

### Beispiele 9 bis 12

### Herstellung von Polyvinylalkoholgruppen auf Polyurethanpfropfgrundlagen enthaltenden Pfropfpolymerisaten

### Beispiel 9

Das in Beispiel 5 erhaltene Pfropfpolymerisat wird in methanolischer Lösung umgeestert bzw. verseift.

Hierzu wird das Pfropfpolymerisat zu einer 50 Gew.-% Feststoff enthaltenden methanolischen Lösung gelöst und mit 5 Mol-% NaOH, bezogen auf die Molmenge der in dem Pfropfpolymerisat enthaltenen aufgepfropften Vinylacetateinheiten, in 10 gew.-%iger methanolischer Lösung, bei Raumtemperatur versetzt.

Nach 11 Minuten Reaktionszeit bei Raumtemperatur tritt in der Reaktionsmasse Gelbildung auf und nach 45 Minuten Reaktionszeit ist die Verseifungsreaktion beendet. Das erhaltene gelförmige Verseifungsprodukt wird in einer üblichen Mühle granuliert, das Granulat mit Methanol unter Zusatz von Essigsäure bis zur neutralen pH-Wertreaktion gewaschen und getrocknet. Der Hydrolysegrad des erhaltenen Verseifungsproduktes beträgt 97,4 Mol-%. Sein Gehalt an Vinylalkoholeinheiten beträgt 41,3 Gew.-%. Es kann ohne weitere Reinigung erfindungsgemäß zur Acetalisierung verwendet werden.

### Beispiel 10

Es wird wie in Beispiel 9, jedoch mit folgenden Abänderungen verfahren:
Anstelle des Polyvinylacetatpfropfpolymerisats des Beispiels 5 wird das Polyvinylacetatpfropfpolymerist des Beispiels 6 verwendet. Die Gelbildungszeit beträgt 6 Minuten, anstatt 11 Minuten.

Das Verseifungsprodukt hat einen Hydrolysegrad von 98,2 Mol-%, anstatt 97,4 Mol-%, und sein Gehalt an Vinylalkoholeinheiten beträgt 58,9 Gew.-%, anstatt 41,3 Gew.-%.

### Beispiel 11

Es wird wie in Beispiel 9, jedoch mit folgenden Abänderungen verfahren:
Anstelle des Polyvinylacetatpfropfpolymerisats des Beispiels 5 wird das Polyvinylacetatpfropfpolymerisat des Beispiels 7 verwendet. Es werden 1,9 Mol-% NaOH, anstatt 5 Mol-% NaOH, verwendet, die Gelbildungszeit beträgt 15 Minuten, anstatt 11 Minuten, und die Reaktionszeit beträgt 120 Minuten, anstatt 45 Minuten.

Das Verseifungsprodukt hat einen Hydrolysegrad von 98 Mol-%, anstatt 97,4 Mol-%, und sein Gehalt an Vinylalkoholeinheiten beträgt 50,8 Gew.-%, anstatt 41,3 Gew.-%.

### Beispiel 12

Es wird wie in Beispiel 9, jedoch mit folgenden Abänderungen verfahren:
Anstelle des Polyvinylacetatpfropfpolymerisats des Beispiels 5 wird das Polyvinylacetatpfropfpolymerisat des Beispiels 8 verwendet.

Es werden 1,9 Mol-% NaOH, anstatt 5 Mol-% NaOH, verwendet, die Gelbildungszeit beträgt 13 Minuten, anstatt 11 Minuten, und die Reaktionszeit beträgt 120 Minuten, anstatt 45 Minuten.

Das Verseifungsprodukt hat einen Hydrolysegrad von 98,7 Mol-%, anstatt 97,4 Mol-%, und sein Gehalt an Vinylalkoholeinheiten beträgt 58,9 Gew.-%, anstatt 41,3 Gew.-%.

### Beispiele 13 - 16

### Herstellung von Pfropfpolyvinylacetalen in wäßriger Lösung

Herstellung von Polyvinylacetalgruppen enthaltenden Polymerisaten, die acetalisierte Polyvinylalkoholgruppen auf Polyurethanpfropfgrundlagen enthalten und die im folgenden gegebenenfalls kurz "Pfropfpolyvinylacetale" oder "Pfropfpolyvinylbutyrale" bzw. "Pfropf-PV-Butyral" genannt werden, durch Umsetzung von Aldehyden, wie z. B. Butyraldehyd, mit Pfropfpolymerisaten, die Polyvinylalkoholgruppen auf Polyurethanpfropfgrundlagen enthalten und im folgenden gegebenenfalls kurz "Pfropfpolyvinylalkohol" bzw. "Pfropf-PVAL" genannt werden, in wäßriger Lösung.

### Beispiel 13

In einem Reaktionsgefäß mit Rührwerk werden 400 g Pfropf-PVAL des Beispiels 9 bei 85°C zusammen mit 0,84 g C₁₅-Alkansulfonsäure (70 gew.-%ig in Wasser) in 5327 g Wasser gelöst. Anschließend wird die Lösung auf Raumtemperatur gekühlt, mit 289,8 ml konz. Salzsäure versetzt und auf die Reaktionstemperatur von +2°C gekühlt. Nach ca. 45 Minuten Stehenlassen der Mischung bei +2°C werden innerhalb von 90 Minuten 184,3 g n-Butyraldehyd zudosiert, anschließend das Gemisch langsam auf Raumtemperatur gebracht und 120 Minuten bei 30°C nachreagieren lassen. Danach wird das pulverförmig ausgefallene Reaktionsprodukt von der flüssigen Phase abgesaugt, mit schwach alkalischem Wasser und anschließend mit reinem Wasser gewaschen mit der Maßgabe,, daß auf dem Produkt noch eine geringe Alkalimenge verbleibt, die durch Bestimmung des Alkalititers (ml 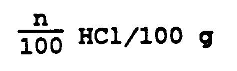
Polymerisat) ermittelt wird.
An dem erhaltenen Pfropfpolyvinylbutyral werden folgende analytische und anwendungstechnische Kenndaten ermittelt:
Der Gehalt an Vinylalkoholeinheiten in dem Pfropf-PV-Butyral beträgt 11,9 Gew.-%, bezogen auf das Pfropf-PV-Butyral, bzw. 24,6 Mol-%, bezogen auf den Vinylalkoholeinheitengehalt (= 100 Mol-%) in dem Ausgangs-Pfropf-PVAL vor der Acetalisierung. Der Alkalititer des Pfropf-PV-Butyrals beträgt 103,2 ml 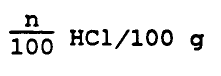
Polymerisat.
Spezifische Folieneigenschaften von Pfropf-PV-Butyral-Preßfolien, gepreßt bei 160 bar und 95°C, wie z. B. Reißfestigkeit (N/mm²) und Dehnbarkeit (%), sind nicht bestimmbar, da die Folien zu brüchig sind.

Das Pfropf-PV-Butyral eignet sich gut zur Herstellung von harten Beschichtungen auf nicht flexiblen Materialien, wobei die Beschichtung vorzugsweise durch Aufpressen aus der Polymerisatschmelze erfolgen kann.

### Beispiel 14

Es wird wie im Beispiel 13, jedoch mit folgenden Abänderungen verfahren:
Anstelle von Pfropf-PVAL des Beispiels 9 wird Pfropf-PVAL des Beispiels 10 verwendet. Es werden 213,3 g n-Butyraldehyd, anstatt 184,3 g, und 329,7 ml konz. Salzsäure, anstatt 289,8 ml, eingesetzt. Die Reaktionstemperatur beträgt +1°C, anstatt +2°C, und die Nachreaktionszeit beträgt 210 Minuten bei 30°C, anstatt 120 Minuten bei 30°C.
Der Gehalt an Vinylalkoholeinheiten in dem erhaltenen Pfropf-PV-Butyral beträgt 11,1 Gew.-%, anstatt 11,9 Gew.-%, bzw. 22,5 Mol-%, anstatt 24,6 Mol-%. Der Alkalititer des Pfropf-PV-Butyrals beträgt 256,9 ml 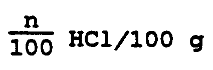
Polymerisat, anstatt 103,2 ml

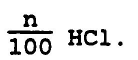

Die Eigenschaften von Pfropf-PV-Butyral-Preßfolien sind denen des Beispiels 13 ähnlich, ebenso die Beschichtungseigenschaften.

### Beispiel 15

Es wird wie in Beispiel 13, jedoch mit folgenden Abänderungen verfahren:
Anstelle von Pfropf-PVAL des Beispiels 9 wird Pfropf-PVAL des Beispiels 11 verwendet. Es werden 164,8 g n-Butyraldehyd, anstatt 184,3 g, und 254,8 ml konz. Salzsäure, anstatt 289,8 ml, eingesetzt.
Die Reaktionstemperatur beträgt +3°C, anstatt +2°C, und die Nachreaktionszeit beträgt 90 Minuten bei 40°C, anstatt 120 Minuten bei 30°C.

Der Gehalt an Vinylalkoholeinheiten in dem erhaltenen Pfropf-PV-Butyral beträgt 9,7 Gew.-%, anstatt 11,9 Gew.-%, bzw. 23,7 Mol-%, anstatt 24,6 Mol-%. Der Alkalititer des Pfropf-PV-Butyrals beträgt 86,7 ml 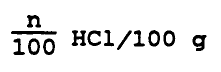
Polymerisat, anstatt 103,2 ml

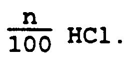

Die Pfropf-PV-Butyral-Preßfolien besitzen eine Reißfestigkeit von 12,2 N/mm² und eine Dehnbarkeit von 268 %, im Gegensatz zu den brüchigen und prüfungsuntauglichen Preßfolien des Beispiels 13. Das Pfropf-PV-Butyral besitzt gute Beschichtungseigenschaften.

### Beispiel 16

Es wird wie in Beispiel 13, jedoch mit folgenden Abänderungen verfahren:
Anstelle von Pfropf-PVAL des Beispiels 9 wird Pfropf-PVAL des Beispiels 12 verwendet. Es werden 135 g n-Butyraldehyd, ansatt 184,3 g, und 208,7 ml konz. Salzsäure, anstatt 289,8 ml, eingesetzt. Die Nachreaktionszeit beträgt 120 Minuten bei 25°C, anstatt 120 Minuten bei 30°C.

Der Gehalt an Vinylalkoholeinheiten in dem erhaltenen Pfropf-PV-Butyral beträgt 21,7 Gew.-%, anstatt 11,9 Gew.-%, bzw. 44,2 Mol-%, anstatt 24,6 Mol-%. Der Alkalititer des Pfropf-PV-Butyrals beträgt 24,0 ml 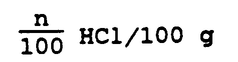
Polymerisat, anstatt 103,2 ml

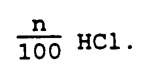

Die Pfropf-PV-Butyral-Preßfolien besitzen eine Reißfestigkeit von 10,1 N/mm² und eine Dehnbarkeit von 176 %, im Gegensatz zu den brüchigen und prüfungsuntauglichen Preßfolien des Beispiels 13.

Das Pfropf-PV-Butyral besitzt gute Beschichtungseigenschaften.

### Beispiele 17 - 18

### Herstellung von Pfropfpolyvinylacetalen in organischen Lösungsmitteln

### Beispiel 17

In einer beheizbaren Rührapparatur mit Rückflußkühler werden 75 g Pfropf-PVAL des Beispiels 10 in 300 g Ethanol aufgeschlämmt bzw. dispergiert, mit 31,7 g Butyraldehyd und 5 g p-Toluolsulfonsäure versetzt und die Mischung 300 Minuten am Rückfluß erhitzt. Das Reaktionsgemisch wird nach Abkühlung auf Raumtemperatur in eisgekühltes Wasser gegossen, wobei das gebildete Pfropfpolyvinylbutyral feinteilig ausfällt. Es wird von der flüssigen Phase abgesaugt, mit schwach alkalischem Wasser und anschließend mit reinem Wasser gewaschen mit der Maßgabe, daß auf dem Produkt noch eine geringe Alkalimenge verbleibt, die durch Bestimmung des Alkalititers (ml 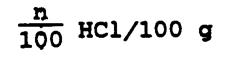
Polymerisat) ermittelt wird.
An dem erhaltenen Pfropf-PV-Butyral werden folgende analytische und anwendungstechnische Kenndaten ermittelt:
Der Gehalt an Vinylalkoholeinheiten in dem Pfropf-PV-Butyral beträgt 15,7 Gew.-%, bezogen auf das Pfropf-PV-Butyral, bzw. 31,0 Mol-%, bezogen auf den Vinylalkoholeinheitengehalt (= 100 Mol-%) in dem Ausgangs-Pfropf-PVAL vor der Acetalisierung.
Der Alkalititer des Pfropf-PV-Butyrals beträgt 109,3 ml 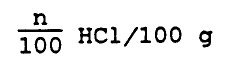
Polymerisat.

Spezifische Folieneigenschaften von Pfropf-PV-Butyral-Preßfolien, gepreßt bei 160 bar und 95°C, wie z. B. Reißfestigkeit (N/mm²) und Dehnbarkeit (%), sind nicht bestimmbar, da die Folien zu brüchig sind.

Das Pfropf-PV-Butyral eignet sich gut zur Herstellung von harten Beschichtungen auf nicht flexiblen Materialien, wobei die Beschichtung vorzugsweise durch Aufpressen aus der Polymerisatschmelze erfolgen kann.

### Beispiel 18

Es wird wie in Beispiel 17, jedoch mit folgenden Abänderungen verfahren:
Es werden 27,7 g Butyraldehyd, anstatt 31,7 g, eingesetzt. Der Gehalt an Vinylalkoholeinheiten in dem erhaltenen Pfropf-PV-Butyral beträgt 18,7 Gew.-%, anstatt 15,7 Gew.-%, bzw. 36,3 Mol-%, anstatt 31,0 Mol-%.

Der Alkalititer des Pfropf-PV-Butyrals beträgt 282,1 ml 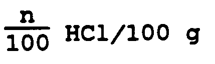
Polymerisat, anstatt 109,3 ml

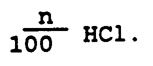

Die Eigenschaften von Pfropf-PV-Butyral-Preßfolien sind denen des Beispiels 17 ähnlich, ebenso die Beschichtungseigenschaften.

## Patentansprüche (Patentansprüche für folgende(n) Vertragsstaat(en): AT, BE, CH, DE, FR, GB, IT, LI, NL, SE)

1. Polyvinylacetalgruppen enthaltende Polymerisate, dadurch gekennzeichnet, daß sie aus Pfropfpolymerisaten, die Polyvinylalkoholgruppen auf Polyurethanpfropfgrundlagen mit mindestens 2 Urethangruppen im Molekül und Einheiten aus Diisocyanaten und gegebenenfalls geringen Mengen aus monofunktionellen Isocyanaten sowie Einheiten aus Diolen und/oder halbveresterten oder halbverätherten Diolresten enthalten, durch Umsetzung mit Aldehyden erhalten worden sind.

2. Polymerisate nach Anspruch 1, dadurch gekennzeichnet, daß sie durch Umsetzung mit (C₁-C₂₀)-Aldehyden unter Säurekatalyse erhalten worden sind.

3. Polymerisate nach Anspruch 1 oder 2, dadurch gekennzeichnet, daß sie durch Umsetzung mit Butyraldehyd erhalten worden sind.

4. Polymerisate nach einem oder mehreren der Ansprüche 1 bis 3, dadurch gekennzeichnet, daß die Umsetzung mit Aldehyden in wäßriger Lösung und/oder organischen Lösungsmitteln erfolgte.

5. Polymerisate nach einem oder mehreren der Ansprüche 1 bis 4, dadurch gekennzeichnet, daß die Umsetzung unter Zusatz von Säurekatalysatoren aus der Gruppe Salzsäure, Schwefelsäure, Phosphorsäure, organische Sulfonsäuren, erfolgte.

6. Polymerisate nach einem oder mehreren der Ansprüche 1 bis 5, dadurch gekennzeichnet, daß die Umsetzung in wasserhaltigem Medium unter Zusatz von anionischen Emulgatoren aus der Gruppe (C₈-C₂₀)-Alkansulfonsäuren, fluorierte Fettsäuren bzw. fluorierte langkettige Sulfonsäuren, langkettige Alkylsulfosuccinatester, erfolgte.

7. Polymerisate nach einem oder mehreren der Ansprüche 1 bis 6, dadurch gekennzeichnet, daß sie Stabilisatoren aus der Gruppe 2,4-Di-tert.-butyl-p-kresol, Tris-nonylphenylphosphit enthalten.

8. Polymerisate nach einem oder mehreren der Ansprüche 1 bis 7, dadurch gekennzeichnet, daß die Polyurethanpfropfgrundlagen mindestens 2 Urethangruppen im Molekül und Einheiten aus Diisocyanaten und gegebenenfalls geringen Mengen aus monofunktionellen Isocyanaten sowie Einheiten aus Diolen und/oder halbveresterten oder halbverätherten Diolresten enthalten, und auf die Polyurethanpfropfgrundlagen Polymerreste bzw. Polymerketten aus Einheiten von Carbonsäurevinylestern mit 3 bis 20 C-Atomen und/oder deren Verseifungsprodukten und gegebenenfalls Einheiten von weiteren ethylenisch ungesättigten, polymerisationsfähigen und gegebenenfalls verseifungsfähigen, gegebenenfalls copolymerisierten Monomeren und/oder deren Verseifungsprodukten aufgepfropft sind, wobei der Anteil an Vinylalkoholeinheiten in den verseiften bzw. teilverseiften Pfropfpolymerisaten vor der Acetalisierung > 10 Gew.-%, vorzugsweise 15 bis 85 Gew.-%, insbesondere 30 bis 80 Gew.-%, bezogen auf das verseifte bzw. teilverseifte, nicht acetalisierte Pfropfpolymerisat, beträgt.

9. Polymerisate nach einem oder mehreren der Ansprüche 1 bis 8, dadurch gekennzeichnet, daß in dem acetalisierten Polymerisat der Gehalt an restlichen nichtacetalisierten Vinylalkoholeinheiten > 7,5 Mol-% beträgt, bezogen auf den molaren Gehalt (=100 Mol-%) an Vinylalkoholeinheiten in dem Ausgangs-Pfropfpolyvinylalkohol vor der Acetalisierung.

10. Pfropfpolymerisate nach einem oder mehreren der Ansprüche 1 bis 9, dadurch gekennzeichnet, daß die Polyurethanpfropfgrundlagen Diol-Einheiten aus der Gruppe Polyethylenglykol, 1,4-Butandiol, und Diisocyanat-Einheiten aus der Gruppe Isophorondiisocyanat, Hexamethylendiisocyanat enthalten.

11. Polyvinylacetalgruppen enthaltende Polymerisate, dadurch gekennzeichnet, daß sie durch Acetalisierung von Gemischen aus üblichem Polyvinylalkohol und Pfropfpolymerisaten, die Polyvinylalkoholgruppen auf Polyurethanpfropfgrundlagen enthalten, nach einem oder mehreren der Ansprüche 1 bis 10 erhalten worden sind.

12. Polymerisate nach Anspruch 11, dadurch gekennzeichnet, daß sie durch Acetalisierung von Gemischen aus üblichem Polyvinylalkohol und Pfropfpolymerisaten, die Polyvinylalkoholgruppen auf Polyurethanpfropfgrundlagen enthalten, im Gewichtsverhältnis von 99:1 bis 1:99 erhalten worden sind.

13. Verfahren zur Herstellung von Polyvinylacetalgruppen enthaltenden Pfropfpolymerisaten auf Polyurethanpfropfgrundlagen nach einem oder mehreren der Ansprüche 1 bis 12 durch Umsetzung von Aldehyden mit Polyvinylalkoholgruppen enthaltenden Polymerisaten unter Acetalisierung der letzteren in wäßriger Lösung und/oder in organischen Lösungsmitteln unter Mitverwendung von Säurekatalysatoren und gegebenenfalls von Emulgatoren und gegebenenfalls von Stabilisatoren sowie Einsatz des Aldehyds in geringem stöchiometrischem Überschuß und nachfolgende Isolierung des Pfropfpolyvinylacetals, vorzugsweise in feinteiliger Pulverform, dadurch gekennzeichnet, daß man zur Acetalisierung ein Polyvinylalkoholgruppen auf Polyurethanpfropfgrundlagen enthaltendes Pfropfpolymerisat einsetzt, wobei die Polyurethanpfropfgrundlagen mindestens 2 Urethangruppen im Molekül und Einheiten aus Diisocyanaten und gegebenenfalls geringen Mengen aus monofunktionellen Isocyanaten sowie Einheiten aus Diolen und/oder halbveresterten oder halbverätherten Diolresten enthalten, und auf die Polyurethanpfropfgrundlagen Polymerreste bzw. Polymerketten aus Einheiten von Carbonsäurevinylestern mit 3 bis 20 C-Atomen und/oder deren Verseifungsprodukten und gegebenfalls Einheiten von weiteren ethylenisch ungesättigten, polymerisationsfähigen und gegebenenfalls verseifungsfähigen, gegebenenfalls copolymerisierten Monomeren und/oder deren Verseifungsprodukten aufgepfropft sind, wobei der Anteil an Vinylalkoholeinheiten in den verseiften bzw. teilverseiften Pfropfpolymerisaten vor der Acetalisierung > 10 Gew.-%, vorzugsweise 15 bis 85 Gew.-%, insbesondere 30 bis 80 Gew.-%, bezogen auf das verseifte bzw. teilverseifte, nicht acetalisierte Pfropfpolymerisat, beträgt.

14. Verfahren nach Anspruch 13, dadurch gekennzeichnet, daß man zur Acetalisierung zusätzlich Polyvinylalkohol einsetzt.

15. Verfahren nach Anspruch 13 oder 14, dadurch gekennzeichnet, daß man als Aldehyd Butyraldehyd einsetzt.

16. Verwendung von Pfropfpolyvinylacetalen nach einem oder mehreren der Ansprüche 1 bis 12 bzw. hergestellt nach einem oder mehreren der Ansprüche 13 bis 15 als Bestandteil von Beschichtungsmassen für diverse Substrate, als Bindemittel und/oder Beschichtungsmittelbestandteil für Faser- und/oder Zellulosematerialien, als Bindemittel in Lackzubereitungen, insbesondere solchen mit korrosionsneutralen Eigenschaften auf Metallen, als korrosionsneutrale Beschichtungsmasse für Metalle, als Bindemittel für Pigmente, als Bindemittel für die Herstellung von Druckfarben und Klebstoffen, als Schmelzkleber, als Bindemittel für Keramikpulver, als Werkstoff für thermoplastisch verarbeitbare Formkörper und Beschichtungsmassen, gegebenenfalls in Kombination mit üblichen Zusatzstoffen und/oder Modifizierungskomponenten bzw. Vernetzungsmitteln, als Zwischenlagenfolie bei der Herstellung von Verbundgläsern sowie als Mischungskomponente bzw. Verschnittkomponente für übliche Polyvinylacetale.

17. Glasverbunde, enthaltend Pfropfpolyvinylbutyralfolie nach Anspruch 16 als Verbundschicht.

## Patentansprüche (Patentansprüche für folgende(n) Vertragsstaat(en): ES)

1. Verfahren zur Herstellung von Polyvinylacetalgruppen enthaltenden Polymerisaten, dadurch gekennzeichnet, daß man Pfropfpolymerisate, die Polyvinylalkoholgruppen auf Polyurethanpfropfgrundlagen mit mindestens 2 Urethangruppen im Molekül und Einheiten aus Diisocyanaten und gegebenenfalls geringen Mengen aus monofunktionellen Isocyanaten sowie Einheiten aus Diolen und/oder halbveresterten oder halbverätherten Diolresten enthalten, mit Aldehyden umsetzt.

2. Verfahren nach Anspruch 1, dadurch gekennzeichnet, daß man die Umsetzung mit (C₁-C₂₀)-Aldehyden unter Säurekatalyse durchführt.

3. Verfahren nach Anspruch 1 oder 2, dadurch gekennzeichnet, daß man die Umsetzung mit Butyraldehyd durchführt.

4. Verfahren nach einem oder mehreren der Ansprüche 1 bis 3, dadurch gekennzeichnet, daß man die Umsetzung mit Aldehyden in wäßriger Lösung und/oder organischen Lösungsmitteln durchführt.

5. Verfahren nach einem oder mehreren der Ansprüche 1 bis 4, dadurch gekennzeichnet, daß man die Umsetzung unter Zusatz von Säurekatalysatoren aus der Gruppe Salzsäure, Schwefelsäure, Phosphorsäure, organische Sulfonsäuren, durchführt.

6. Verfahren nach einem oder mehreren der Ansprüche 1 bis 5, dadurch gekennzeichnet, daß man die Umsetzung in wasserhaltigem Medium unter Zusatz von anionischen Emulgatoren aus der Gruppe (C₈-C₂₀)-Alkansulfonsäuren, fluorierte Fettsäuren bzw. fluorierte langkettige Sulfonsäuren, langkettige Alkylsulfosuccinatester, durchführt.

7. Verfahren nach einem oder mehreren der Ansprüche 1 bis 6, dadurch gekennzeichnet, daß man dem Pfropfpolyvinylacetal Stabilisatoren aus der Gruppe 2,4-Di-tert.-butyl-p-kresol, Tris-nonylphenylphosphit zusetzt.

8. Verfahren zur Herstellung von Polyvinylacetalgruppen enthaltenden Pfropfpolymerisaten auf Polyurethanpfropfgrundlagen nach einem oder mehreren der Ansprüche 1 bis 7 durch Umsetzung von Aldehyden mit Polyvinylalkoholgruppen enthaltenden Polymerisaten unter Acetalisierung der letzteren in wäßriger Lösung und/oder in organischen Lösungsmitteln unter Mitverwendung von Säurekatalysatoren und gegebenenfalls von Emulgatoren und gegebenenfalls von Stabilisatoren sowie Einsatz des Aldehyds in geringem stöchiometrischem Überschuß und nachfolgende Isolierung des Pfropfpolyvinylacetals, vorzugsweise in feinteiliger Pulverform, dadurch gekennzeichnet, daß man zur Acetalisierung ein Polyvinylalkoholgruppen auf Polyurethanpfropfgrundlagen enthaltendes Pfropfpolymerisat einsetzt, wobei die Polyurethanpfropfgrundlagen mindestens 2 Urethangruppen im Molekül und Einheiten aus Diisocyanaten und gegebenenfalls geringen Mengen aus monofunktionellen Isocyanaten sowie Einheiten aus Diolen und/oder halbveresterten oder halbverätherten Diolresten enthalten, und auf die Polyurethanpfropfgrundlagen Polymerreste bzw. Polymerketten aus Einheiten von Carbonsäurevinylestern mit 3 bis 20 C-Atomen und/oder deren Verseifungsprodukten und gegebenenfalls Einheiten von weiteren ethylenisch ungesättigten, polymerisationsfähigen und gegebenenfalls verseifungsfähigen, gegebenenfalls copolymerisierten Monomeren und/oder deren Verseifungsprodukten aufgepfropft sind, wobei der Anteil an Vinylalkoholeinheiten in den verseiften bzw. teilverseiften Pfropfpolymerisaten vor der Acetalisierung > 10 Gew.-%, vorzugsweise 15 bis 85 Gew.-%, insbesondere 30 bis 80 Gew.-%, bezogen auf das verseifte bzw. teilverseifte, nicht acetalisierte Pfropfpolymerisat, beträgt.

9. Verfahren nach einem oder mehreren der Ansprüche 1 bis 8, dadurch gekennzeichnet, daß in dem acetalisierten Polymerisat der Gehalt an restlichen nichtacetalisierten Vinylalkoholeinheiten > 7,5 Mol-% beträgt, bezogen auf den molaren Gehalt (=100 Mol-%) an Vinylalkoholeinheiten in dem Ausgangs-Pfropfpolyvinylalkohol vor der Acetalisierung.

10. Verfahren nach einem oder mehreren der Ansprüche 1 bis 9, dadurch gekennzeichnet, daß die Polyurethanpfropfgrundlagen Diol-Einheiten aus der Gruppe Polyethylenglykol, 1,4-Butandiol, und Diisocyanat-Einheiten aus der Gruppe Isophorondiisocyanat, Hexamethylendiisocyanat enthalten.

11. Verfahren nach einem oder mehreren der Ansprüche 1 bis 10, dadurch gekennzeichnet, daß zur Acetalisierung Gemische aus üblichem Polyvinylalkohol und Pfropfpolymerisaten, die Polyvinylalkoholgruppen auf Polyurethanpfropfgrundlagen enthalten, eingesetzt werden.

12. Verfahren nach Anspruch 11, dadurch gekennzeichnet, daß zur Acetalisierung Gemische aus üblichem Polyvinylalkohol und Pfropfpolymerisaten, die Polyvinylalkoholgruppen auf Polyurethanpfropfgrundlagen enthalten, im Gewichtsverhältnis von 99:1 bis 1:99 eingesetzt werden.

13. Verwendung von Pfropfpolyvinylacetalen, hergestellt nach einem oder mehreren der Ansprüche 1 bis 12, als Bestandteil von Beschichtungsmassen für diverse Substrate, als Bindemittel und/oder Beschichtungsmittelbestandteil für Faser- und/oder Zellulosematerialien, als Bindemittel in Lackzubereitungen, insbesondere solchen mit korrosionsneutralen Eigenschaften auf Metallen, als korrosionsneutrale Beschichtungsmasse für Metalle, als Bindemittel für Pigmente, als Bindemittel für die Herstellung von Druckfarben und Klebstoffen, als Schmelzkleber, als Bindemittel für Keramikpulver, als Werkstoff für thermoplastisch verarbeitbare Formkörper und Beschichtungsmassen, gegebenenfalls in Kombination mit üblichen Zusatzstoffen und/oder Modifizierungskomponenten bzw. Vernetzungsmitteln, als Zwischenlagenfolie bei der Herstellung von Verbundgläsern sowie als Mischungskomponente bzw. Verschnittkomponente für übliche Polyvinylacetale.

14. Glasverbunde, enthaltend Pfropfpolyvinylbutyralfolie nach Anspruch 13 als Verbundschicht.

## Claims (Claims for the following Contracting State(s): AT, BE, CH, DE, FR, GB, IT, LI, NL, SE)

1. Polymers containing polyvinyl acetal groups, which have been obtained from graft polymers containing polyvinyl alcohol groups on polyurethane grafting substrates having at least 2 urethane groups in the molecule and units from diisocyanates and, if appropriate, minor quantities of monofunctional isocyanates as well as units of diols and/or half-esterified or half-etherified diol radicals, by reaction with aldehydes.

2. Polymers as claimed in claim 1, which have been obtained by reaction with (C₁-C₂₀)-aldehydes under acid catalysis.

3. Polymers as claimed in claim 1 or 2, which have been obtained by reaction with butyraldehyde.

4. Polymers as claimed in one or more of claims 1 to 3, for which the reaction with aldehydes was carried out in aqueous solution and/or organic solvents.

5. Polymers as claimed in one or more of claims 1 to 4, for which the reaction was carried out with an addition of acid catalysts from the group comprising hydrochloric acid, sulfuric acid, phosphoric acid and organic sulfonic acids.

6. Polymers as claimed in one or more of claims 1 to 5, for which the reaction was carried out in a water-containing medium with the addition of anionic emulsifiers from the group comprising (C₈-C₂₀)-alkanesulfonic acids, fluorinated fatty acids or fluorinated long-chain sulfonic acids and long-chain alkylsulfosuccinates.

7. Polymers as claimed in one or more of claims 1 to 6, which contain stabilizers from the group comprising 2,4-di-tert.-butyl-p-cresol and tris-nonylphenyl phosphite.

8. Polymers as claimed in one or more of claims 1 to 7, wherein the polyurethane grafting substrates contain at least 2 urethane groups in the molecule and units from diisocyanates and, if appropriate, minor quantities of monofunctional isocyanates as well as units of diols and/or half-esterified or half-etherified diol radicals, and polymer radicals or polymer chains of units of vinyl carboxylates having 3 to 20 carbon atoms and/or hydrolysis products thereof and, if appropriate, units of further ethylenically unsaturated, polymerizable and, if appropriate, hydrolyzable and, if appropriate, copolymerized monomers and/or hydrolysis products thereof have been grafted onto the polyurethane grafting substrates, the proportion of vinyl alcohol units in the hydrolyzed or partially hydrolyzed graft polymers before the acetalization being > 10% by weight, preferably 15 to 85% by weight and especially 30 to 80% by weight, relative to the hydrolyzed or partially hydrolyzed, unacetalized graft polymer.

9. Polymers as claimed in one or more of claims 1 to 8, wherein the content of residual unacetalized vinyl alcohol units in the acetalized polymer is > 7.5 mol%, relative to the molar content (= 100 mol%) of vinyl alcohol units in the starting graft polyvinyl alcohol before acetalization.

10. Polymers as claimed in one or more of claims 1 to 9, wherein the polyurethane grafting substrates contain diol units from the group comprising polyethylene glycol and 1,4-butanediol, and diisocyanate units from the group comprising isophorone diisocyanate and hexamethylene diisocyanate.

11. Polymers containing polyvinyl acetal groups, which have been obtained by acetalization of mixtures of conventional polyvinyl alcohol and graft polymers containing polyvinyl alcohol groups on polyurethane grafting substrates, as claimed in one or more of claims 1 to 10.

12. Polymers as claimed in claim 11, which have been obtained by acetalization of mixtures of conventional polyvinyl alcohol and graft polymers containing polyvinyl alcohol groups on polyurethane grafting substrates, in a weight ratio from 99:1 to 1:99.

13. A process for preparing graft polymers, containing polyvinyl acetal groups, on polyurethane grafting substrates as claimed in one or more of claims 1 to 12 by reacting aldehydes with polymers containing polyvinyl alcohol groups, the latter being acetalized in aqueous solution and/or in organic solvents with the additional use of acid catalysts and, if appropriate, emulsifiers and, if appropriate, stabilizers as well as using the aldehyde in a small stoichiometric excess, and subsequently isolating the graft polyvinyl acetal, preferably in the form of a finely disperse powder, which comprises using, for the acetalization, a graft polymer containing polyvinyl alcohol groups on polyurethane grafting substrates, the polyurethane grafting substrates containing at least 2 urethane groups in the molecule and units from diisocyanates and, if appropriate, minor quantities of monofunctional isocyanates as well as units of diols and/or half-esterified or half-etherified diol radicals, and polymer radicals or polymer chains of units of vinyl carboxylates having 3 to 20 carbon atoms and/or hydrolysis products thereof and, if appropriate, units of further ethylenically unsaturated, polymerizable and, if appropriate, hydrolyzable and, if appropriate, copolymerized monomers and/or hydrolysis products thereof having been grafted onto the polyurethane grafting substrates, the proportion of vinyl alcohol units in the hydrolyzed or partially hydrolyzed graft polymers before the acetalization being > 10% by weight, preferably 15 to 85% by weight and especially 30 to 80% by weight, relative to the hydrolyzed or partially hydrolyzed, unacetalized graft polymer.

14. The process as claimed in claim 13, wherein polyvinyl alcohol is additionally used for the acetalization.

15. The process as claimed in claim 13 or 14, wherein butyraldehyde is used as the aldehyde.

16. The use of graft polyvinyls acetals as claimed in one or more of claims 1 to 12 and/or prepared as claimed in one or more of claims 13 to 15, as a constituent of coating compositions for diverse substrates, as a binder and/or coating agent constituent for fiber materials and/or cellulose materials, as a binder in paint formulations, especially those having non-corrosive properties on metals, as a non-corrosive coating composition for metals, as a binder for pigments, as a binder for the production of printing inks and adhesives, as a hot-melt adhesive, as a binder for ceramic powders, as a material for thermoplastically processable moldings and coating compositions, if appropriate in combination with conventional additives and/or modifier components or crosslinking agents, as an interleaving film in the production of laminated glasses and as a mixing component or extender component for conventional polyvinyl acetals.

17. Laminated glass, containing a graft polyvinyl butyral film as claimed in claim 16 as a bonding layer.

## Claims (Claims for the following Contracting State(s): ES)

1. A process for preparing polymers with polyvinyl acetal groups, which comprises reacting graft polymers containing polyvinyl alcohol groups on polyurethane grafting substrates having at least 2 urethane groups in the molecule and units from diisocyanates and, if appropriate, minor quantities of monofunctional isocyanates as well as units of diols and/or half-esterified or half-etherified diol radicals, with aldehydes.

2. The process as claimed in claim 1, wherein the reaction is carried out with (C₁-C₂₀)-aldehydes under acid catalysis.

3. The process as claimed in claim 1 or 2, wherein the reaction is carried out with butyraldehyde.

4. The process as claimed in one or more of claims 1 to 3, wherein the reaction with aldehydes is carried out in aqueous solution and/or organic solvents.

5. The process as claimed in one or more of claims 1 to 4, wherein the reaction is carried out with an addition of acid catalysts from the group comprising hydrochloric acid, sulfuric acid, phosphoric acid and organic sulfonic acids.

6. The process as claimed in one or more of claims 1 to 5, wherein the reaction is carried out in a water-containing medium with the addition of anionic emulsifiers from the group comprising (C₈-C₂₀)-alkanesulfonic acids, fluorinated fatty acids or fluorinated long-chain sulfonic acids and long-chain alkylsulfosuccinates.

7. The process as claimed in one or more of claims 1 to 6, wherein stabilizers from the group comprising 2,4-di-tert.-butyl-p-cresol and tris-nonylphenyl phosphite are added to the graft polyvinyl acetal.

8. A process for preparing graft polymers, containing polyvinyl acetal groups, on polyurethane grafting substrates as claimed in one or more of claims 1 to 7 by reacting aldehydes with polymers containing polyvinyl alcohol groups, the latter being acetalized in aqueous solution and/or in organic solvents with the additional use of acid catalysts and, if appropriate, emulsifiers and, if appropriate, stabilizers as well as using the aldehyde in a small stoichiometric excess, and subsequently isolating the graft polyvinyl acetal, preferably in the form of a finely disperse powder, which comprises using, for the acetalization, a graft polymer containing polyvinyl alcohol groups on polyurethane grafting substrates, the polyurethane grafting substrates containing at least 2 urethane groups in the molecule and units from diisocyanates and, if appropriate, minor quantities of monofunctional isocyanates as well as units of diols and/or half-esterified or half-etherified diol radicals, and polymer radicals or polymer chains of units of vinyl carboxylates having 3 to 20 carbon atoms and/or hydrolysis products thereof and, if appropriate, units of further ethylenically unsaturated, polymerizable and, if appropriate, hydrolyzable and, if appropriate, copolymerized monomers and/or hydrolysis products thereof having been grafted onto the polyurethane grafting substrates, the proportion of vinyl alcohol units in the hydrolyzed or partially hydrolyzed graft polymer before the acetalization being > 10% by weight, preferably 15 to 85% by weight and especially 30 to 80% by weight, relative to the hydrolyzed or partially hydrolyzed, unacetalized graft polymer.

9. The process as claimed in one or more of claims 1 to 8, wherein the content of residual unacetalized vinyl alcohol units in the acetalized polymer is > 7.5 mol%, relative to the molar content (= 100 mol%) of vinyl alcohol units in the starting graft polyvinyl alcohol before acetalization.

10. The process as claimed in one or more of claims 1 to 9, wherein the polyurethane grafting substrates contain diol units from the group comprising polyethylene glycol and 1,4-butanediol, and diisocyanate units from the group comprising isophorone diisocyanate and hexamethylene diisocyanate.

11. The process as claimed in one or more of claims 1 to 10, wherein mixtures of conventional polyvinyl alcohol and graft polymers containing polyvinyl alcohol groups on polyurethane grafting substrates are used for the acetalization.

12. The process as claimed in claim 11, wherein mixtures of conventional polyvinyl alcohol and graft polymers containing polyvinyl alcohol groups on polyurethane grafting substrates, in a weight ratio from 99:1 to 1:99 are used. A process for preparing graft polymers, containing polyvinyl acetal groups, on polyurethane grafting substrates as claimed in one or more of claims 1 to 7 by reacting aldehydes with polymers containing polyvinyl alcohol groups, the latter being acetalized in aqueous solution and/or in organic solvents with the additional use of acid catalysts and, if appropriate, emulsifiers and, if appropriate, stabilizers as well as using the aldehyde in a small stoichiometric excess, and subsequently isolating the graft polyvinyl acetal, preferably in the form of a finely disperse powder, which comprises using, for the acetalization, a graft polymer containing polyvinyl alcohol groups on polyurethane grafting substrates.

13. The use of graft polyvinyl acetals prepared as claimed in one or more of claims 1 to 12, as a constituent of coating compositions for diverse substrates, as a binder and/or coating agent constituent for fiber materials and/or cellulose materials, as a binder in paint formulations, especially those having non-corrosive properties on metals, as a non-corrosive coating composition for metals, as a binder for pigments, as a binder for the production of printing inks and adhesives, as a hot-melt adhesive, as a binder for ceramic powders, as a material for thermoplastically processable moldings and coating compositions, if appropriate in combination with conventional additives and/or modifier components or crosslinking agents, as an interleaving film in the production of laminated glasses and as a mixing component or extender component for conventional polyvinyl acetals.

14. Laminated glass, containing a graft polyvinyl butyral film as claimed in claim 13 as a bonding layer.

## Revendications (Revendications pour l'(les) Etat(s) contractant(s) suivant(s): AT, BE, CH, DE, FR, GB, IT, LI, NL, SE)

1. Polymères contenant des groupes poly(acétal vinylique), caractérisés en ce qu'ils ont été obtenus à partir de polymères greffés qui contiennent des groupes poly(alcool vinylique) sur des bases de greffage de polyuréthane ayant au moins 2 groupes uréthane dans la molécule et des unités provenant de diisocyanates et éventuellement de faibles quantités provenant d'isocyanates monofonctionnels, ainsi que des unités provenant de diols et/ou de restes de diols hémi-estérifiés ou hémi-éthérifiés, par réaction avec des aldéhydes.

2. Polymères selon la revendication 1, caractérisés en ce qu'ils ont été obtenus par réaction avec des aldéhydes en C₁-C₂₀ dans des conditions de catalyse acide.

3. Polymères selon la revendication 1 ou 2, carctérisés en ce qu'ils ont été obtenus par réaction avec du butyraldéhyde.

4. Polymères selon l'une ou plusieurs des revendications 1 à 3, caractérisés en ce que la réaction avec des aldéhydes a eu lieu en solution aqueuse et/ou dans des solvants organiques.

5. Polymères selon l'une ou plusieurs des revendications 1 à 4, caractérisés en ce que la réaction a eu lieu en présence de catalyseurs acides du groupe constitué par l'acide chlorhydrique, l'acide sulfurique, l'acide phosphorique, les acides sulfoniques organiques.

6. Polymères selon l'une ou plusieurs des revendications 1 à 5, caractérisés en ce que la réaction a eu lieu dans un milieu contenant de l'eau en présence d'émulsionnants anioniques du groupe constitué par les acides alcanesulfoniques en C₈-C₂₀, les acides gras fluorés ou les acides sulfoniques fluorés à longue chaîne, les esters d'alkylsulfosuccinates à longue chaîne.

7. Polymères selon l'une ou plusieurs des revendications 1 à 6, caractérisés en ce qu'ils contiennent des stabilisants du groupe constitué par le 2,4-di-tert-butyl-p-crésol et le tris-nonylphénylphosphite.

8. Polymères selon l'une ou plusieurs des revendications 1 à 7, caractérisé en ce que les bases de greffage de polyuréthane contiennent au moins 2 groupes uréthane dans la molécule et des unités provenant de diisocyanates et éventuellement de faibles quantités provenant d'isocyanates monofonctionnels, ainsi que des unités provenant de diols et/ou de restes de diols hémi-estérifiés ou hémi-éthérifiés, et en ce que des restes de polymères ou des chaînes de polymères constitués d'unités d'esters vinyliques d'acides carboxyliques de 3 à 20 atomes de carbone et/ou de leurs produits de saponification et éventuellement d'unités d'autres monomères à insaturation éthylénique, polymérisables et éventuellement saponifiables, éventuellement copolymérisés et/ou de leurs produits de saponification, sont greffés sur les bases de greffage de polyuréthane, la proportion d'unités d'alcool vinylique dans les polymères saponifiés ou partiellement saponifiés avant l'acétalisation s'élevant à plus de 10 % en masse, de préférence de 15 à 85 % en masse, en particulier de 30 à 80 % en masse par rapport au polymère greffé saponifié ou partiellement saponifié non acétalisé.

9. Polymères selon l'une ou plusieurs des revendications 1 à 8, caractérisé en ce que, dans le polymère acétalisé, la teneur en unités d'alcool vinylique restantes non acétalisées est supérieure à 7,5 % en moles par rapport à la teneur en moles (= 100 %) en unités d'alcool vinylique dans le poly(alcool vinylique) greffé de départ avant l'acétalisation.

10. Polymères greffés selon l'une ou plusieurs des revendications 1 à 9, caractérisés en ce que les bases de greffage de polyuréthane contiennent des unités diols du groupe constitué par le polyéthylèneglycol et le 1,4-butanediol et des unités diisocyanate du groupe constitué par le diisocyanate d'isophorone et le diisocyanate d'hexaméthylène.

11. Polymères contenant des groupes poly(acétal vinylique), caractérisés en ce qu'ils ont été obtenus par acétalisation de mélanges de poly(alcool vinylique) classique et de polymères greffés contenant des groupes poly(alcool vinylique) sur des bases de greffage de polyuréthane selon l'une ou plusieurs des revendications 1 à 10.

12. Polymères selon la revendication 11, caractérisés en ce qu'ils ont été obtenus par acétalisation de mélanges de poly(alcool vinylique) classique et de polymères greffés contenant des groupes poly(alcool vinylique) sur des bases de greffage de polyuréthane, dans un rapport en masse de 99:1 à 1:99.

13. Procédé de préparation de polymères greffés contenant des groupes poly(acétal vinylique) sur des bases de greffage de polyuréthane selon l'une ou plusieurs des revendications 1 à 12 par réaction d'aldéhydes avec des polymères contenant des groupes poly(alcool vinylique), avec acétalisation de ces derniers en solution aqueuse et/ou dans des solvants organiques en présence de catalyseurs acides et éventuellement d'émulsionnants et éventuellement de stabilisants, avec introduction de l'aldéhyde en un faible excès stoechiométrique et isolement subséquent du poly(acétal vinylique) greffé, de préférence sous forme de poudre finement divisée, caractérisé en ce qu'on utilise pour l'acétalisation un polymère greffé contenant des groupes poly(alcool vinylique) sur des bases de greffage de polyuréthane, dans lesquels les bases de greffage de polyuréthane contiennent au moins 2 groupes uréthane dans la molécule et des unités provenant de diisocyanates et éventuellement de faibles quantités provenant d'isocyanates monofonctionnels, ainsi que des unités provenant de diols et/ou de restes de diols hémi-estérifiés ou hémi-éthérifiés, et dans lesquels des restes de polymères ou des chaînes de polymères constitués d'unités d'esters vinyliques d'acides carboxyliques de 3 à 20 atomes de carbone et/ou de leurs produits de saponification et éventuellement d'unités d'autres monomères à insaturation éthylénique, polymérisables et éventuellement saponifiables, éventuellement copolymérisés et/ou de leurs produits de saponification, sont greffés sur les bases de greffage de polyuréthane, la proportion d'unités d'alcool vinylique dans les polymères saponifiés ou partiellement saponifiés avant l'acétalisation s'élevant à plus de 10 % en masse, de préférence de 15 à 85 % en masse, en particulier de 30 à 80 % en masse par rapport au polymère greffé saponifié ou partiellement saponifié non acétalisé.

14. Procédé selon la revendication 13, caractérisé en ce qu'on utilise en plus pour l'acétalisation du poly(alcool vinylique).

15. Procédé selon la revendication 13 ou 14, caractérisé en ce que, comme aldéhyde, on utilise le butyraldéhyde.

16. Utilisation de poly(acétals vinyliques) greffés selon l'une ou plusieurs des revendications 1 à 12 ou préparés selon l'une ou plusieurs des revendications 13 à 15 comme constituants de masses de revêtement pour différents substrats, comme liants et/ou constituants d'agents de revêtement pour des matières fibreuses et/ou cellulosiques, comme liants dans des compositions de peintures, en particulier celles qui ont des propriétés inertes vis-à-vis de la corrosion pour des métaux, comme masses de revêtement inertes vis-à-vis de la corrosion pour des métaux, comme liants pour des pigments, comme liants pour la préparation d'encres d'impression et de colles, comme colles à fusion, comme liants pour des poudres céramiques, comme matières premières pour des produits moulés et des masses de revêtement pouvant subir une transformation thermoplastique, éventuellement en combinaison avec des additifs et/ou des constituants modifiants ou des agents réticulants classiques, comme feuilles intermédiaires pour la préparation de verres feuilletés et comme constituants de mélanges ou constituants de dilution pour des poly(acétals vinyliques) classiques.

17. Verres feuilletés contenant une feuille en poly(butyral vinylique) greffé selon la revendication 16 comme couche de liaison.

## Revendications (Revendications pour l'(les) Etat(s) contractant(s) suivant(s): ES)

1. Procédé de préparation de produits de polymérisation à groupes de polyvinylacétal, procédé caractérisé en ce que l'on fait réagir avec des aldéhydes des polymères à groupes d'alcool polyvinylique greffés sur des bases de greffage de polyuréthanes avec au moins deux groupes uréthane par molécule et des motifs de diisocyanates et le cas échéant de faibles proportions d'isocyanates monofonctionnels ainsi que des motifs de diols et/ou de semi-esters ou de semi-éthers de diols.

2. Procédé selon la revendication 1 caractérisé en ce que l'on effectue la réaction avec des aldéhydes en C₁-C₂₀, en catalyse acide.

3. Procédé selon la revendication 1 ou 2, caractérisé en ce que l'on effectue la réaction avec du butyraldéhyde.

4. Procédé selon une ou plusieurs des revendications 1 à 3, caractérisé en ce que l'on effectue la réaction avec les aldéhydes en solution aqueuse et/ou dans des solvants organiques.

5. Procédé selon une ou plusieurs des revendications 1 à 4, caractérisé en ce que l'on effectue la réaction en présence de catalyseurs acides pris parmi les acides chlorhydrique, sulfurique, phosphorique et des acides sulfoniques organiques.

6. Procédé selon une ou plusieurs des revendications 1 à 5, caractérisé en ce que l'on effectue la réaction dans un milieu aqueux en présence d'émulsionnants anioniques pris parmi des acides alcanesulfoniques en C₈-C₂₀, des acides gras fluorés, des acides sulfoniques fluorés à longue chaîne et des esters alkylsulfosucciniques à longue chaîne.

7. Procédé selon une ou plusieurs des revendications 1 à 6, caractérisé en ce que l'on ajoute au polyvinylacétal de greffage des stabilisants pris parmi le 2,4-di-tert-butyl-p-crésol et le phosphite de tris-nonylphényle.

8. Procédé de préparation de polymères greffés contenant des groupes poly(acétal vinylique) sur des bases de greffage de polyuréthane selon l'une ou plusieurs des revendications 1 à 7 par réaction d'aldéhydes avec des polymères contenant des groupes poly(alcool vinylique), avec acétalisaion de ces derniers en solution aqueuse et/ou dans des solvants organiques en présence de catalyseurs acides éventuellement d'émulsionnants et éventuellement de stabilisants, avec introduction de l'aldéhyde en un faible excès stoechiométrique et isolement subséquent de poly(acétal vinylique) greffé, de préférence sous forme de poudre finement divisée, caractérisé en ce qu'on utilise pour l'acétalisation un polymère greffé contenant des groupes poly(alcool vinylique) sur des bases de greffage de polyuréthane, dans lesquels les bases de greffage de polyuréthane contiennent au moins 2 groupes uréthane dans la molécule et des unités provenant de diisocyanates et éventuellement de faibles quantités provenant d'isocyanates monofonctionnels, ainsi que des unités provenant de diols et/ou de restes de diols hémi-estérifiés ou hémi-éthérifiés, et dans lesquels des restes de polymères ou des chaînes de polymères constitués d'unités d'esters vinyliques d'acides carboxyliques de 3 à 20 atomes de carbone et/ou de leurs produits de saponification et éventuellement d'unités d'autres monomères à insaturation éthylénique, polymérisables et éventuellement saponifiables, éventuellement copolymérisés et/ou de leurs produits de saponification, sont greffés sur des bases de greffage de polyuréthane, la proportion d'unités d'alcool vinylique dans les polymères saponifiés ou partiellement saponifiés avant l'acétalisation s'élevant à plus de 10 % en masse, de préférence de 15 à 85 % en masse, en particulier de 30 à 80 % en masse par rapport au polymère greffé saponifié ou partiellement saponifié non acétalisé.

9. Procédé selon une ou plusieurs des revendications 1 à 8, caractérisé en ce que la teneur du polymère acétalysé en motifs d'alcool vinylique restants non-acétalysés est supérieure à 7,5 moles % par rapport à la teneur molaire (100 moles %) en motifs d'alcool vinylique de l'alcool polyvinylique de greffage initial avant l'acétalisation.

10. Procédé selon une ou plusieurs des revendications 1 à 9, caractérisé en ce que les bases de greffage de polyurétanes comprennent des motifs de diols du groupe polyéthylène-glycol et 1,4-butane-diol et des motifs de diisocyanates du groupe des diisocyanates d'isophorone et d'hexaméthylène.

11. Procédé selon l'une ou plusieurs des revendications 1 à 10, caractérisé en ce que l'on effectue l'acétalisation avec des mélanges d'alcool polyvinylique ordinaire et de polymères de greffage à groupes d'alcool polyvinylique sur des bases de greffage de polyuréthanes.

12. Procédé selon la revendication 11, caractérisé en ce que l'on effectue l'acétalisation avec des mélanges d'alcool polyvinylique ordinaire et de polymères de greffage à groupes d'alcool polyvinylique sur des bases de greffage de polyuréthanes dans un rapport pondéral compris entre 99:1 et 1:99.

13. Utilisation de polyvinylacétals greffés obtenus selon une ou plusieurs des revendications 1 à 12 comme constituants de produits de revêtement de divers substrats, comme liants et/ou constituants d'agents de revêtement pour des matières fibreuses et/ou cellulosiques, comme liants dans des compositions de peintures, en particulier celles qui ont des propriétés inertes vis-à-vis de la corrosion pour des métaux, comme masses de revêtement inertes vis-à-vis de la corrosion pour des métaux, comme liants pour des pigments, comme liants pour la préparation d'encres d'impression et de colles, comme colles à fusion, comme liants pour des poudres céramiques, comme matières premières pour des produits moulés et des masses de revêtement pouvant subir une transformation thermoplastique, éventuellement en combinaison avec des additifs et/ou des constituants modifiants ou des agents réticulants classiques, comme feuilles intermédiaires pour la préparation de verres feuilletés et comme constituants de mélanges ou constituants de dilution pour des poly(acétals vinyliques) classiques.

14. Verres feuilletés comprenant comme couche de composite une feuille de polyvinylbutyral greffé selon la revendication 13.
